(19) Europäisches Patentamt
European Patent Office
Office européen des brevets

(11) **EP 4 715 038 A1**

(12) **EUROPEAN PATENT APPLICATION**
published in accordance with Art. 153(4) EPC

(43) Date of publication:
**25.03.2026 Bulletin 2026/13**

(21) Application number: **24807227.4**

(22) Date of filing: **15.05.2024**

(51) International Patent Classification (IPC):
**C12M 1/34** (2006.01)    **C12Q 1/68** (2018.01)
**G06M 11/00** (2006.01)

(52) Cooperative Patent Classification (CPC):
**G01N 21/6452; C12M 1/34; G01N 21/6458;
G06M 11/00;** G01N 2021/6421

(86) International application number:
**PCT/JP2024/017950**

(87) International publication number:
**WO 2024/237276 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.05.2023 JP 2023082318**

(71) Applicant: **Toppan Holdings Inc.
Tokyo 110-0016 (JP)**

(72) Inventors:
• **NAGAHARA Misaki
Tokyo 110-0016 (JP)**
• **SAITO Junichi
Tokyo 110-0016 (JP)**
• **MASUDA Tomohito
Tokyo 110-0016 (JP)**

(74) Representative: **Plasseraud IP
104 Rue de Richelieu
CS92104
75080 Paris Cedex 02 (FR)**

(54) **WELL COUNTING DEVICE, WELL COUNTING METHOD, DIGITAL MEASUREMENT SYSTEM, AND PROGRAM**

(57) A well counting device comprises an image acquisition unit that acquires one or more images of a plurality of wells capturing a target substance; and a counting unit that counts the number of wells emitting fluorescence among the plurality of wells for each of the one or more images acquired by the image acquisition unit, wherein the counting unit counts the number of wells emitting fluorescence, excluding a well that also emits fluorescence in adjacent wells, among the plurality of wells.

FIG.1

**Description**

[Technical Field]

The present invention relates to a well counting device, a well counting method, a digital measurement system, and a program.

The present application claims priority to Japanese Patent Application No. 2023-082318 filed May 18, 2023, the entire contents of which are incorporated herein by reference.

[Background Art]

In recent years, there is an increasing need for accurately detecting target substances in biological samples for the purpose of, for example, detecting disease early. Examples of target substances include DNA (deoxyribonucleic acid), RNA (ribonucleic acid), proteins, cells, and the like, but are not limited thereto. As a method of detecting a target substance in a biological sample with higher accuracy, techniques for causing enzymatic reactions in a large number of microcompartments are being investigated. These techniques are called digital measurement. Digital measurement includes digital ELISA (enzyme-linked immunosorbent assay), digital PCR (polymerase chain reaction), and the like.

In digital measurement, a sample solution is divided into a large number of minute solutions. Then, a signal from each minute solution is binarized, and the number of molecules of the target substance is measured by determining only whether the target substance is present or not. Digital measurement can significantly improve detection sensitivity and quantifiability compared to ELISA, real-time PCR, etc. of the conventional art.

In digital measurement using a well array with a plurality of wells (micropores) for capturing target substances, the captured target substances remain within the wells and do not unintentionally flow out of the wells. Then, fluorescence is emitted in the wells that capture the target substances. For example, when the target substance is DNA, fluorescence can be obtained by reactions such as ICA and PCR, or by binging of a fluorescently labeled probe to the target DNA. PTL 1 discloses a technique for detecting target substances by using a separately photographed image as a master and calculating the difference between the original image and the master image when performing digital measurement using a well array with a plurality of wells (micropores) for capturing target substances.

[Citation List]

[Patent Literature]

PTL 1: JP 6800864 B

[Summary of the Invention]

[Technical Problem]

However, the technique disclosed in PTL 1 has a problem in that disturbance factors, such as foreign matter adhering to the well array and scratches on the well array, may be detected as target substances.

The present invention has been made in consideration of these circumstances, and provides a well counting device, a well counting method, a digital measurement system, and a program, all of which can eliminate disturbance factors in digital measurement.

[Solution to Problem]

The present invention has been made to solve the above problems, and the well counting device according to a first aspect of the present invention comprises an image acquisition unit that acquires one or more images of a plurality of wells capturing a target substance, and a counting unit that counts the number of wells emitting fluorescence among the plurality of wells for each of the one or more images acquired by the image acquisition unit, wherein the counting unit counts the number of wells emitting fluorescence, excluding a well that also emits fluorescence in adjacent wells, among the plurality of wells.

Further, in the well counting device according a second aspect of the present invention, in the first aspect, each of the one or more images may correspond to a color of fluorescence emitted by each of the plurality of wells, and the counting unit may count the number of wells emitting fluorescence, excluding, from wells emitting fluorescence in an image of fluorescence of a first color corresponding to a target image, wells emitting fluorescence in an image of fluorescence of a second color different from the first color, among the plurality of wells.

Further, in the well counting device according a third aspect of the present invention, in the second aspect, a second threshold value that is used when determining that fluorescence is also emitted in an image of a color of fluorescence different from the color of fluorescence corresponding to the target image may be different from a first threshold value that is used when counting the number of wells emitting fluorescence.

In the well counting device according a fourth aspect of the present invention, in any one of the first to third aspects, each of the one or more images may correspond to a color of fluorescence emitted by each of the plurality of wells, the well counting device may comprise a mixing removal unit that adjusts the luminance of each pixel of the one or more images acquired by the image acquisition unit based on the luminance of a corresponding pixel in another image of the one or more images, and when counting the number of wells emitting fluorescence among the plurality of wells, the counting unit may use an image whose luminance has been adjusted by the mixing removal unit.

Further, in the well counting device according a fifth aspect of the present invention, in the fourth aspect, the mixing removal unit may comprise a filter that transmits the spectrum of fluorescence of a first color for a target image, and when the transmission spectrum of the filter overlaps with the spectrum of fluorescence of a second color different from the first color, the counting unit may use an image obtained by removing a luminance component due to the fluorescence of the second color from an image taken using the filter.

Further, in the well counting device according a sixth aspect of the present invention, in any one of the first to fifth aspects, one of the target substances may be introduced into one of the plurality of wells.

Further, another aspect of the present invention is a well counting method, comprising a first step of acquiring one or more images of a plurality of wells capturing a target substance, and a second step of counting the number of wells emitting fluorescence among the plurality of wells for each of the one or more images acquired in the first step, wherein in the second step, the number of wells emitting fluorescence is counted, excluding a well that also emits fluorescence in adjacent wells, among the plurality of wells.

Further, another aspect of the present invention is a digital measurement system, comprising a microscope and a well counting device, the microscope generating one or more images of a plurality of wells capturing a target substance, the well counting device comprising an image acquisition unit that acquires one or more images taken by the microscope, and a counting unit that counts the number of wells emitting fluorescence among the plurality of wells for each of the one or more images acquired by the image acquisition unit, wherein the counting unit counts the number of wells emitting fluorescence, excluding a well that also emits fluorescence in adjacent wells.

Further, another aspect of the present invention is a program for causing a computer to function as an image acquisition unit that acquires one or more images of a plurality of wells capturing a target substance, and a counting unit that counts the number of wells emitting fluorescence among the plurality of wells for each of the one or more images acquired by the image acquisition unit, wherein the counting unit counts the number of wells emitting fluorescence, excluding a well that also emits fluorescence in adjacent wells.

[Advantageous Effects of the Invention]

According to the present invention, the well counting device, well counting method, digital measurement system, or program can eliminate disturbance factors.

[Brief Description of the Drawings]

Fig. 1 is a schematic diagram showing the configuration of a digital measurement system 10 according to a first embodiment of the present invention.
Fig. 2 is a diagram showing an example of images generated by a microscope 200 in the first embodiment.
Fig. 3 is a schematic block diagram showing the configuration of a well counting device 300 in the first embodiment.
Fig. 4 is a spectrum diagram for illustrating the process performed by a mixing removal unit 324 in the first embodiment.
Fig. 5 is a schematic diagram illustrating the process performed by the mixing removal unit 324 in the first embodiment.
Fig. 6 is a diagram showing image examples before and after the mixing removal process by the mixing removal unit 324 in the first embodiment.
Fig. 7 is a flowchart illustrating the process performed by the well counting device 300 in the first embodiment.
Fig. 8 is a flowchart illustrating the process performed by a counting unit 330 in the first embodiment.
Fig. 9 is a schematic diagram showing a first example of the arrangement of adjacent wells in the first embodiment.
Fig. 10 is a schematic diagram showing a second example of the arrangement of adjacent wells in the first embodiment.
Fig. 11 is a schematic diagram showing a third example of the arrangement of adjacent wells in the first embodiment.
Fig. 12 is a schematic diagram showing the configuration of a digital measurement system 10 according to a second embodiment of the present invention.

[Description of the Embodiments]

<First embodiment>

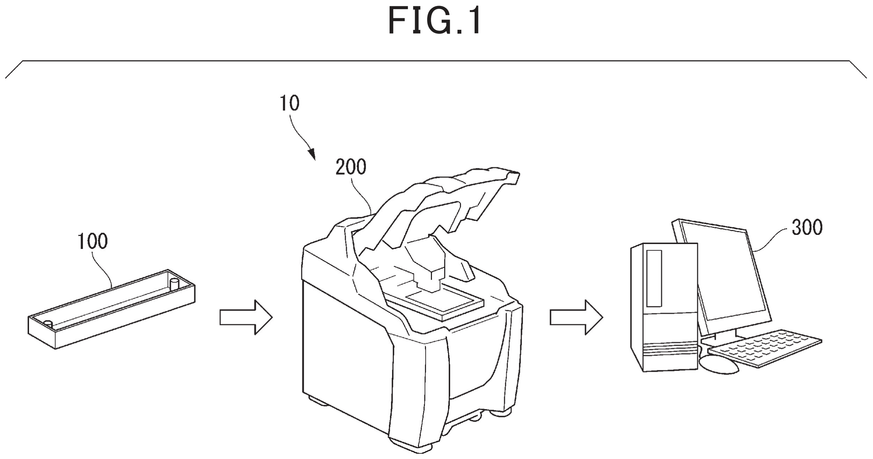

The first embodiment of the present invention will be described below with reference to the drawings. Fig. 1 is a schematic diagram showing the configuration of a digital measurement system 10 according to the first embodiment of the present invention. The digital measurement system 10 is a system that counts the number of wells capturing each type of target substance among a plurality of wells in a well array 100, and includes a microscope 200 and a well counting device 300.

Each of the plurality of wells captures one or more types of target substances. When the well is irradiated with excitation light while it captures a target substance, the well emits fluorescence of a color that corresponds to the type of target substance captured. The shape, dimensions, and arrangement of the wells are not particularly limited. The present embodiment also includes a case in which one target substance is introduced into one well, and a case in which no target substance is introduced into one well.

The wells are preferably microwells of a small volume. For example, each well may have a volume of approximately 10 fL to 100 pL. The well array 100 includes a plurality of wells of the same shape and size. The same shape and size may refer to the same shape and volume required for the digital measurement, and a manufacturing error variation may be acceptable.

When the well has a cylindrical shape, the maximum diameter of the well in plan view is preferably, for example, 10 nm to 100 $\mu$m, more preferably 100 nm to 50 $\mu$m, and even more preferably 1 $\mu$m to 20 $\mu$m. The depth of the well is preferably, for example, 10 nm to 100 $\mu$m, more preferably 100 nm to 50 $\mu$m, and even more preferably 1 $\mu$m to 20 $\mu$m. The volume of the well is preferably, for example, 1 fL or more and 6 nL or less, more preferably 1 fL or more and 5 pL or less, even more preferably 1 fL or more and 2 pL or less, and particularly preferably 1fL or more and 300 fL or less.

When the volume of each well is within such a range, it is possible to preferably perform enzymatic reactions in micro-spaces, such as digital PCR and Invader reactions. For example, gene mutations can be detected by digital PCR. The arrangement of the wells is not particularly limited, and may be arranged, for example, in a triangular lattice shape or a square lattice shape, or may be randomly arranged.

The microscope 200 generates one or more images of a plurality of wells. The microscope 200 irradiates a plurality of wells with excitation light, and photographs a state in which wells capturing the target substance emit fluorescence, thereby generating images. When the microscope 200 photographs a plurality of wells, a filter according to the color of fluorescence may be used. That is, the one or more images generated by the microscope 200 may correspond to the colors of fluorescence emitted by the plurality of wells. Photographing using a filter according to the color of fluorescence is called fluorescence photography. The microscope 200 may also generate bright-field images of a plurality of wells without using a filter.

The well counting device 300 uses the images generated by the microscope 200 to count the number of wells emitting fluorescence. This allows the well counting device 300 to quantitatively measure the number of target substances. The well counting device 300 may be achieved by one or more computers reading and executing a program.

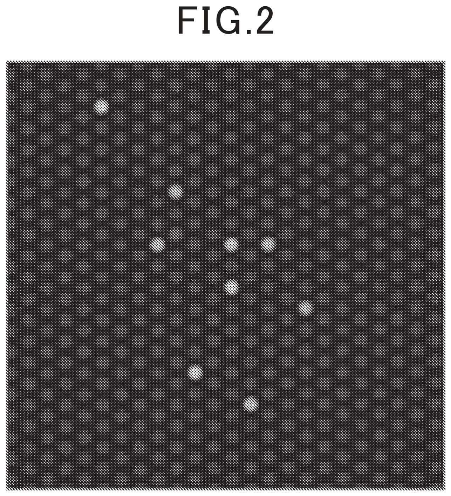

Fig. 2 is a diagram showing an example of images generated by the microscope 200 in the present embodiment. In the image example shown in Fig. 2, a plurality of wells are arranged in a triangular lattice shape, some of which have higher luminance. These wells with higher luminance are the wells emitting fluorescence and are the targets to be counted by the well counting device 300.

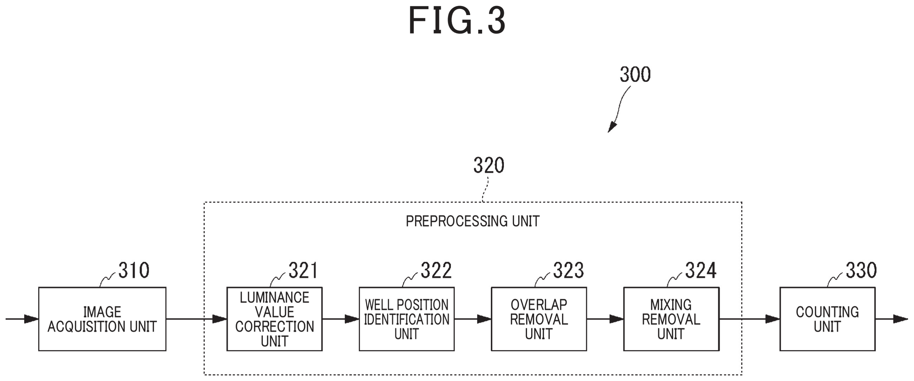

Fig. 3 is a schematic block diagram showing the configuration of the well counting device 300 in the present embodiment. The well counting device 300 includes an image acquisition unit 310, a preprocessing unit 320, and a counting unit 330. The image acquisition unit 310 acquires one or more images generated by the microscope 200. The image acquisition unit 310 may acquire images from the microscope 200 via an IP (internet protocol) network or the like, or may acquire images from the microscope 200 through a recording medium such as a USB (universal serial bus) memory.

The preprocessing unit 320 performs processes, such as luminance value correction, well position identification, image overlap removal, and mixing removal, on the images acquired by the image acquisition unit 310, and generates images for counting in the counting unit 330. The preprocessing unit 320 includes a luminance value correction unit 321, a well position identification unit 322, an overlap removal unit 323, and a mixing removal unit 324. The preprocessing unit 320 may not include at least some of the luminance value correction unit 321, well position identification unit 322, overlap removal unit 323, and mixing removal unit 324, and may not perform at least some of luminance value correction, well position identification, image overlap removal, and mixing removal.

The luminance value correction unit 321 corrects the luminance values of the center and periphery of the image acquired by the image acquisition unit 310. In general, luminance values are higher near the center of an image than at its edges. Therefore, on the assumption that the luminance value varies depending on the distance from near the center of the lens, the luminance value correction unit 321 creates a function of the average luminance variation from the center of the image to the periphery, and corrects the image to fill in the variation in this function. This function is created using a reference image obtained by fluorescent photography without any sample in the image.

Instead of creating the function of the average luminance variation, a preconfigured function may be input, and the image may be corrected using the preconfigured function.

The well position identification unit 322 creates a mesh with nodes corresponding to the positions of the wells for the image acquired by the image acquisition unit 310, and identifies the positions of the wells. The image used by the well position identification unit 322 may be a fluorescent image or a bright-field image. The well position identification unit 322 may set a plurality of pre-stored positions in the image as the positions of the wells.

When the images acquired by the image acquisition unit 310 are photographed by dividing the area with wells in the well array 100 into multiple sections, the overlap removal unit 323 removes the areas of overlap between the images. The overlap removal unit 323 may combine the images from which the overlapping areas have been removed so that one image includes the entire area with wells in the well array 100.

The mixing removal unit 324 performs a mixing removal process that adjusts the luminance of each pixel of one or more images acquired by the image acquisition unit 310 based on the luminance of a corresponding pixel in another image of the one or more images. This mixing removal process is performed for the purpose of, for example, when the transmission spectrum of a first filter corresponding to the fluorescence of a first color overlaps with the spectrum of the fluorescence of a second color, removing a luminance component due to the fluorescence of the second color from an image photographed using the first filter. When the spectra of fluorescence of each color are sufficiently separated from each other, and none of the fluorescence passes through the filters of other colors, the mixing removal process may not be performed. In addition, when the target particles introduced into the well array 100 are photographed using a single wavelength (also when the particles are photographed in a single color), the mixing removal process may not be performed.

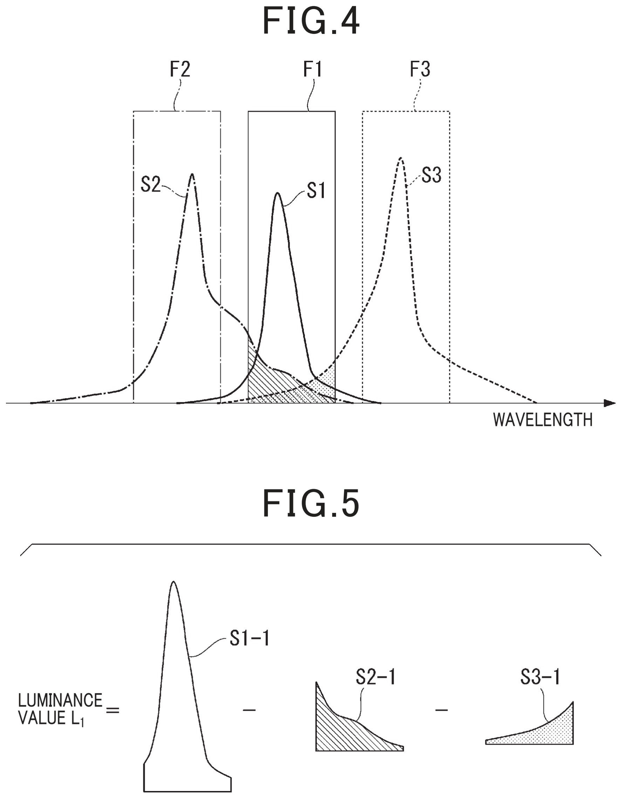

Fig. 4 is a spectrum diagram for illustrating the process performed by the mixing removal unit 324 in the present embodiment. In Fig. 4, the horizontal axis is the wavelength. The spectrum S1 is the spectrum of fluorescence of the first color. The spectrum S2 is the spectrum of fluorescence of the second color. The spectrum S3 is the spectrum of fluorescence of the third color. The region F1 is the transmission region of a filter corresponding to the fluorescence of the first color. The region F2 is the transmission region of a filter corresponding to the fluorescence of the second color. The region F3 is the transmission region of a filter corresponding to the fluorescence of the third color.

For example, the region F1, which is the transmission region of the filter corresponding to the fluorescence of the first color, includes not only the spectrum S1, which is the spectrum of the fluorescence of the first color, but also the spectrum S2, which is the spectrum of the fluorescence of the second color, and the spectrum S3, which is the spectrum of the fluorescence of the third color.

The present embodiment shows the fluorescence spectra of the first to third colors, but is not limited to the fluorescence spectra of the three colors. The fluorescence spectra of four or more colors may also be used for implementation. For example, fluorescence spectra of six colors may be used.

Fig. 5 is a schematic diagram illustrating the process performed by the mixing removal unit 324 in the present embodiment. The mixing removal unit 324 sets a luminance value $L_1$, which is obtained by subtracting a luminance value corresponding to the spectrum S2-1 included in the region F1 of the spectrum S2 of fluorescence of the second color, and a luminance value corresponding to the spectrum S3-1 included in the region F1 of the spectrum S3 of fluorescence of the third color, from a luminance value corresponding to the spectrum S1-1 included in the region F1 in an image photographed using the filter corresponding to the fluorescence of the first color.

At this time, the luminance value corresponding to the spectrum S2-1 is calculated by multiplying the area ratio of a portion of the spectrum S2 included in the region F2 and a portion included in the region F1 by a pixel value in an image photographed using the filter corresponding to the fluorescence of the second color. The same applies to the luminance value corresponding to the spectrum S3-1. Fig. 5 illustrates the image photographed using the filter corresponding to the fluorescence of the first color, and the same applies to images photographed using filters corresponding to the fluorescence of other colors.

The mixing removal unit 324 specifically adjusts the luminance value $L_i(x,y)$ using the following equation (1). In equation (1), the luminance value $L_i(x,y)$ is a luminance value in the coordinates $(x,y)$ of an image according to the fluorescence of the i-th color, and $C_{ij}$ is the coefficient for adjustment, which represents the influence of luminance by the fluorescence of the j-th color in the image according to the fluorescence of the i-th color. When i=j, $C_{ij}$ is 1, and when i≠j, $C_{ij}$ is a value less than or equal to 0 and greater than -1. When i≠j, $C_{ij}$ may be a value input by the operator of the well counting device 300, or may be stored in advance in the well counting device 300.

[Equation 1]

$$L_i(x, y) = \sum_j C_{i,j} L_j(x, y) \quad \cdots \quad (1)$$

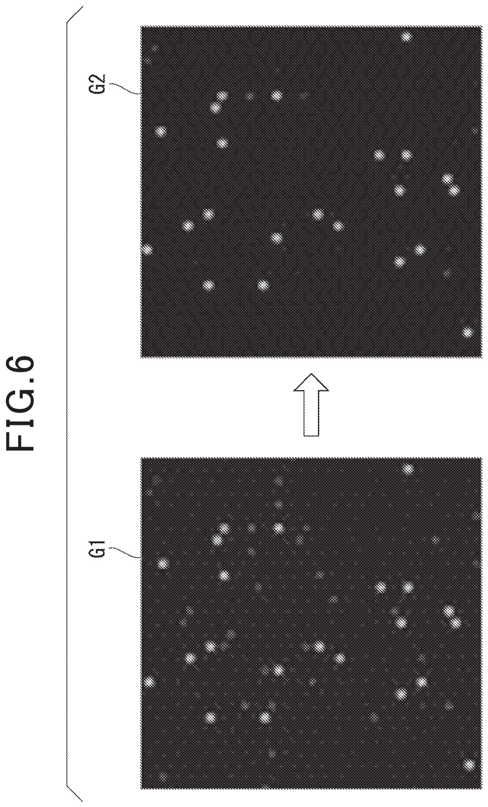

Fig. 6 is a diagram showing image examples before and after the mixing removal process by the mixing removal unit 324 in the present embodiment. In Fig. 6, the image G1 is an example image before the mixing removal process by the mixing removal unit 324, and the image G2 is an image example after the mixing removal process by the mixing removal unit 324. Some of wells that have had luminance in the image G1 have almost no luminance in the image G2, indicating that this was due to the influence of fluorescence of other colors.

Returning to Fig. 3, the counting unit 330 counts the number of wells emitting fluorescence among a plurality of wells for each of one or more images acquired by the image acquisition unit 310 and preprocessed by the preprocessing unit 320. At this time, the counting unit 330 counts the number of wells emitting fluorescence, excluding a well that also emits fluorescence in adjacent wells, among the plurality of wells. Foreign matter adhering to the well array 100 and scratches on the well array 100 often do not within one well, but extend across adjacent wells. In contrast, it can be assumed that in digital measurement, the rate at which adjacent wells capture the same target substance is not high. Therefore, the counting unit 330 thus counts the number of wells, excluding a well that also emits fluorescence in adjacent wells, whereby it can eliminate the influence of disturbance factors, such as foreign matter and scratches.

Furthermore, the counting unit 330 may count the number of wells emitting fluorescence, excluding, from wells emitting fluorescence in an image of fluorescence of a first color corresponding to the target image among the plurality of wells, wells emitting fluorescence in an image of fluorescence of a second color different from fluorescence of the first color. Foreign matter adhering to the well array 100 and scratches on the well array 100 often emit fluorescence not only in an image of fluorescence of the first color, but also in an image of fluorescence of the second color. In contrast, in digital measurement, the well that captures the target substance emits fluorescence of only one color. Therefore, the counting unit 330 thus counts the number of wells, excluding wells that also emit fluorescence in the image of fluorescence of the second color, whereby it can eliminate the influence of disturbance factors, such as foreign matter and scratches.

The second threshold value that is used when determining that fluorescence is also emitted in the image of fluorescence of the second color may be different from the first threshold value that is used when counting the number of wells emitting fluorescence.

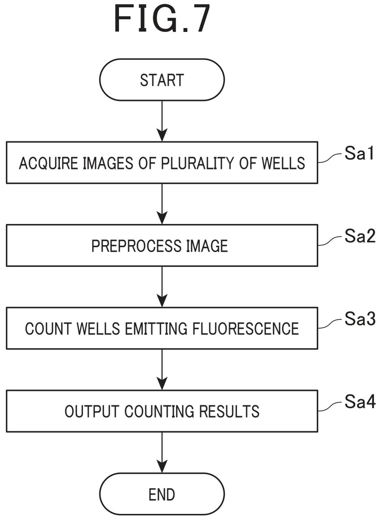

Fig. 7 is a flowchart illustrating the process performed by the well counting device 300 in the present embodiment. The image acquisition unit 310 acquires one or more images of a plurality of wells from the microscope 200 (step Sa1). Next, the preprocessing unit 320 performs preprocesses (e.g., luminance value correction, well position identification, image overlap removal, and mixing removal) on the one or more images obtained in step Sa1 (step Sa2). Next, the counting unit 330 counts the number of wells emitting fluorescence for each of the one or more images preprocessed in step Sa2 (step Sa3). Further, the counting unit 330 outputs the counting results. The output method may be any of displaying on a display, writing to a recording medium such as USB memory, sending to other devices, and the like.

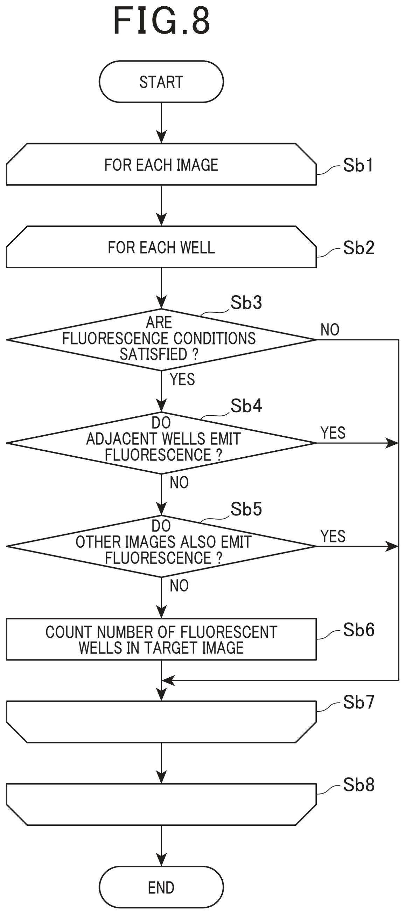

Fig. 8 is a flowchart illustrating the process performed by the counting unit 330 in the present embodiment. The flowchart shown in Fig. 8 corresponds to step Sa3 in Fig 7. The counting unit 330 performs the processes of steps Sb2 to Sb7 for each of the one or more preprocessed images, that is, each of the one or more images each corresponding to the color of fluorescence (step Sb1). The one or more images as mentioned herein each refer to an image corresponding to the type of fluorescence color, that is, the type of target substance.

The counting unit 330 performs the processes of steps Sb3 to Sb6 for each of the plurality of wells included in the target image (step Sb2). In step Sb3, the counting unit 330 determines whether the target well satisfies fluorescence conditions. Although the details of the fluorescence conditions will be described later, the fluorescence conditions are conditions for determining whether the target well emits fluorescence. For example, the fluorescence conditions may include whether the representative value of luminance of the target well exceeds a first threshold value. The representative value of luminance of the target well may be any value as long as it is the representative value of luminance of the target well, such as the mean, mode, median, or integrated value of the luminance value within the target well.

In step Sb3, when it is determined that the target well does not satisfy the fluorescence conditions (step Sb3-No), the counting unit 330 skips steps Sb4 to Sb6 and proceeds to step Sb7. On the other hand, in step Sb3, when it is determined that the target well satisfies the fluorescence conditions (step Sb3-Yes), the counting unit 330 determines whether there is a well emitting fluorescence adjacent to the target well (step Sb4).

The conditions for determining whether adjacent wells emit fluorescence may be that the same conditions as the fluorescence conditions in step Sb3 are satisfied, or may be that some of the fluorescence conditions are satisfied. For example, the determination conditions may include whether the representative value of luminance of the adjacent well exceeds a third threshold value. The third threshold value may be different from or the same as the first threshold value in the fluorescence conditions. The representative value of luminance may be any of the mean, mode, median, and integrated value of the luminance value within the well. The arrangement of wells adjacent to the target well is stored in advance in the counting unit 330.

In step Sb4, when it is determined that there is a well emitting fluorescence in adjacent wells (step Sb4-Yes), the counting unit 330 skips steps Sb5 and Sb6, and proceeds to step Sb7. On the other hand, in step Sb4, when it is determined that there is no well emitting fluorescence in adjacent wells (step Sb4-No), the counting unit 330 determines whether the target well also emits fluorescence in any of the other images (step Sb5). The other images as mentioned herein refer to one or more preprocessed images other than the target image, that is, images included in one or more images each corresponding to the color of fluorescence.

The conditions for determining whether the target well emits fluorescence in other images may be that the same conditions as the fluorescence conditions in step Sb3 are satisfied, or may be that some of the fluorescence conditions are satisfied. For example, the determination conditions may include whether the representative value of luminance in other images exceeds a second threshold value. The second threshold value may be different from or the same as any of the first threshold value in the fluorescence conditions and the third threshold value in step Sb4. The representative value of luminance may be any of the mean, mode, median, and integrated value of the luminance value within the well.

In step Sb5, when it is determined that the target well also emits fluorescence in any of the other images (step Sb5-Yes), the counting unit 330 skips step Sb6 and proceeds to step Sb7. On the other hand, in step Sb5, when it is determined that the target well does not emit fluorescence in any of the other images (step Sb5-No), the counting unit 330 counts the number of fluorescent wells in the target image (step Sb6).

Step Sb7 is the end of the loop for each well in step Sb2. That is, in step Sb7, when the counting unit 330 has not completed the process for all of the plurality of wells in the target image, it selects the next well as the target well and returns to step Sb3, and when the counting unit 330 has completed the process for all of the plurality of wells in the target image, it proceeds to step Sb8.

Step Sb8 is the end of the loop for each image in step Sb1. That is, in step Sb8, when the counting unit 330 has not completed the process for all of the one or more preprocessed images, it selects the next image as the target image and returns to step Sb2, and when the counting unit 330 has completed the process for all of the one or more preprocessed images, it finishes the process.

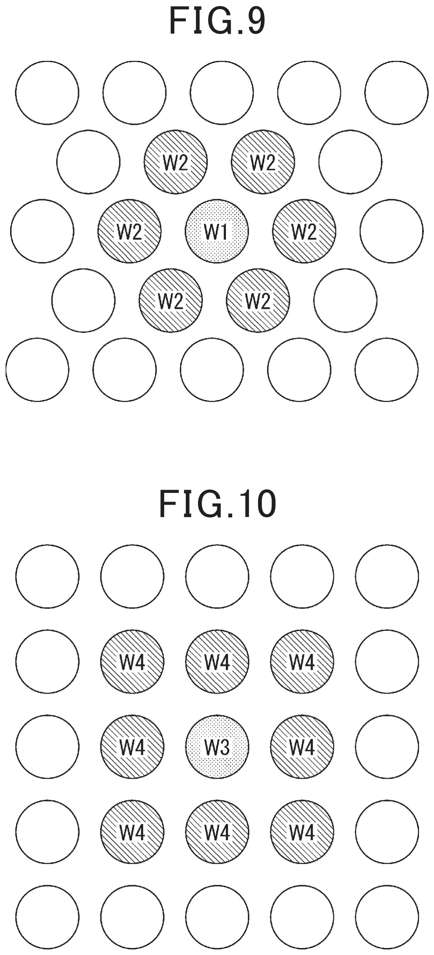

Fig. 9 is a schematic diagram showing a first example of the arrangement of adjacent wells in the present embodiment. The first example shown in Fig. 9 is an example when the wells are arranged in a triangular lattice shape. In the example of Fig. 9, six wells W2 surrounding the target well W1 are adjacent wells.

Fig. 10 is a schematic diagram showing a second example of the arrangement of adjacent wells in the present embodiment.
The second example shown in Fig. 10 is an example when the wells are arranged in a square lattice shape. In the example of Fig. 10, eight wells W4 surrounding the target well W3 are adjacent wells. When wells are arranged in a square lattice shape, four wells on the top, bottom, left, and right of the target well may be regarded as adjacent wells.

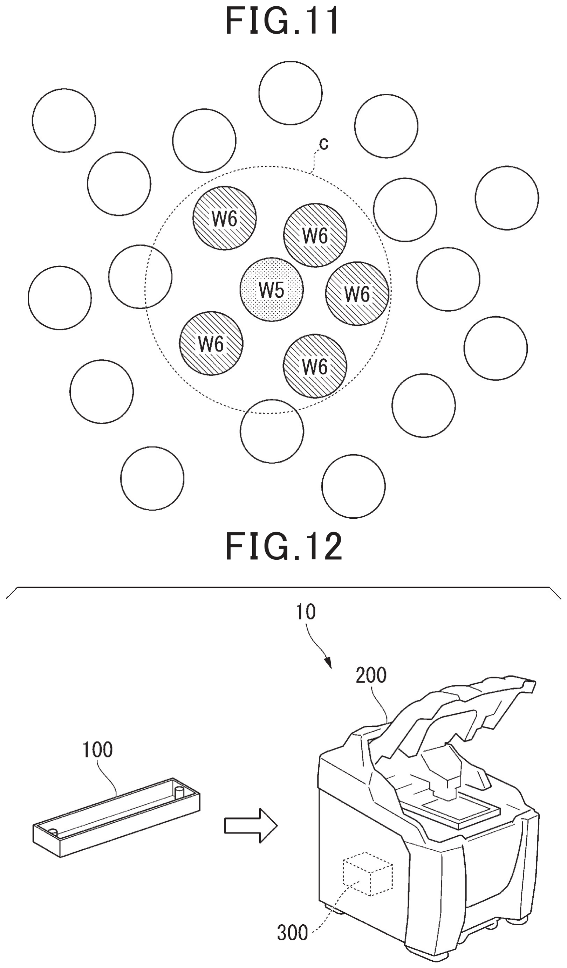

Fig. 11 is a schematic diagram showing a third example of the arrangement of adjacent wells in the present embodiment.
The third example shown in Fig. 11 is an example when the wells are randomly arranged. In the example of Fig. 11, four wells W6 included in the predetermined distance range C from the target well W5 are adjacent wells.

Next, the fluorescence conditions in step Sb3 of Fig. 8 will be described. The fluorescence conditions may include some or all of the conditions listed below, or may include other conditions.

1) circularity
2) area
3) correlation coefficient
4) surrounding luminance
5) average luminance

The circularity in 1) above is subjected to the condition that the shape of a region in which the luminance value is greater than or equal to a threshold value (hereinafter referred to as the light-emitting region) in a certain region from the center of the well (hereinafter referred to as the extraction region) is close to a circle. Specifically, the condition is such that when S is the area of the light-emitting region and L is the perimeter, the circularity $4\pi S/L^2$ is greater than or equal to the threshold value. The circularity $4\pi S/L^2$ becomes a larger value when the shape is closer to a circle, and is 1 when the shape is a circle. The threshold value may be a value input by the operator of the well counting device 300, or may be stored in advance in the well counting device 300.

The area in 2) above is subjected to the condition that the area of the light-emitting region is greater than or equal to a threshold value, or that the area of the light-emitting region is between the upper and lower limit values. The threshold value, upper limit value, and lower limit value may be values input by the operator of the well counting device 300, or may be stored in advance in the well counting device 300.

The correlation coefficient in 3) above is subjected to the condition that the correlation coefficient of an image of the extraction region and a standard image prepared in advance is greater than or equal to a threshold value. The standard image used is a model image of wells emitting fluorescence. The correlation coefficient used may be the normalized correlation coefficient. The threshold value may be a value input by the operator of the well counting device 300, or may be stored in advance in the well counting device 300.

The surrounding luminance in 4) above is subjected to the condition that the well surrounding luminance in the extraction region is less than or equal to a threshold value. The well surrounding luminance is, for example, the average luminance value of regions from the center of the well to well radius × coefficient rate_min or more and well radius × coefficient rate_max or less. The threshold value, well radius, coefficient rate_min, and coefficient rate_max may be values input by the operator of the well counting device 300, or may be stored in advance in the well counting device 300.

The average luminance in 5) above is subjected to the condition that the average luminance value within the well is greater than or equal to a first threshold value.
The first threshold value is a value obtained by multiplying the mode value in the histogram of the average luminance value of wells by the magnification and adding an offset. The histogram may be a histogram related to, among the plurality of wells, wells for which the correlation coefficient in 3) above is greater than or equal to the threshold value. In addition, if there are luminance irregularities depending on the region of the well array, the first threshold value may be determined for each region.
For example, when determining the first threshold value of the target region, the offset may be increased in a region with low luminance and decreased in a region with high luminance, for example, by dividing the mode value of luminance of the entire well array by the mode value of luminance of the target region and multiplying the obtained value by the offset. The threshold value, magnification, and offset may be values input by the operator of the well counting device 300, or may be stored in advance in the well counting device 300. The second threshold value and third threshold value may be calculated in the same manner as for the first threshold value, or may be calculated in the same manner using different magnification and offset from those for the first threshold value.

It is preferable that one target substance is introduced into one of the plurality of wells. It is easier to measure the number of light-emitting wells when one target substance is introduced into one well than when multiple target substances are introduced into one well.

Moreover, in step Sb4, after it is determined that there is no well emitting fluorescence in adjacent wells, the counting unit 330 determines whether the target well also emits fluorescence in any of the other images (step Sb5), but it is not limited thereto. For example, the counting unit 330 may determine whether there is a well emitting fluorescence in adjacent wells (step Sb4) after it determines whether the target well also emits fluorescence in any of the other images (step Sb5).

Furthermore, the determination on whether there is a well emitting fluorescence in adjacent wells (step Sb4) and the determination on whether the target well also emits fluorescence in any of the other images (step Sb5) may be parallel processes.

In this case, if either step Sb4 or Sb5 is applicable, i.e., when fluorescence is emitted in adjacent wells or fluorescence is also emitted in other images, the process proceeds to step Sb6.

<Second embodiment>

Fig. 12 is a schematic diagram showing the configuration of a digital measurement system 10 according to the second embodiment of the present invention. Although the microscope 200 and the well counting device 300 are separate devices in the first embodiment, their functions may be combined into one device. That is, as shown in Fig. 12, the digital measurement system 10 may include the microscope 200 and the well counting device 300 in a single housing.

Further, the following embodiments may also be adopted.

(1) One embodiment is a well counting device, comprising an image acquisition unit that acquires one or more images of a plurality of wells capturing a target substance, and a counting unit that counts the number of wells emitting fluorescence among the plurality of wells for each of the one or more images acquired by the image acquisition unit, wherein the counting unit counts the number of wells emitting fluorescence, excluding a well that also emits fluorescence in adjacent wells, among the plurality of wells.
(2) Another embodiment is the well counting device according to (1), wherein each of the one or more images corresponds to a color of fluorescence emitted by each of the plurality of wells, and the counting unit counts the number of wells emitting fluorescence, excluding wells also emitting fluorescence in an image of a color of fluorescence different from a color of fluorescence corresponding to a target image, among the plurality of wells.
(3) Another embodiment is the well counting device according to (2), wherein a second threshold value that is used when determining that fluorescence is also emitted in an image of a color of fluorescence different from the color of fluorescence corresponding to the target image is different from a first threshold value that is used when counting the number of wells emitting fluorescence.

(4) Another embodiment is the well counting device according to any one of (1) to (3), wherein each of the one or more images corresponds to a color of fluorescence emitted by each of the plurality of wells, the well counting device comprises a mixing removal unit that adjusts the luminance of each pixel of the one or more images acquired by the image acquisition unit based on the luminance of a corresponding pixel in another image of the one or more images, and when counting the number of wells emitting fluorescence among the plurality of wells, the counting unit uses an image whose luminance has been adjusted by the mixing removal unit.

(5) Another embodiment is the well counting device according to (4), wherein the mixing removal unit comprises a filter that transmits the spectrum of fluorescence of a first color for a target image, and when the transmission spectrum of the filter overlaps with the spectrum of fluorescence of a second color different from the first color, the counting unit uses an image obtained by removing a luminance component due to the fluorescence of the second color from an image taken using the filter.

(6) Another embodiment is the well counting device according to any one of (1) to (5), wherein one of the target substances is introduced into one of the plurality of wells.

(7) Another embodiment is a well counting method, comprising a first step of acquiring one or more images of a plurality of wells capturing a target substance, and a second step of counting the number of wells emitting fluorescence among the plurality of wells for each of the one or more images acquired in the first step, wherein in the second step, the number of wells emitting fluorescence is counted, excluding a well that also emits fluorescence in adjacent wells, among the plurality of wells.

(8) Another embodiment is a digital measurement system, comprising a microscope and a well counting device, the microscope generating one or more images of a plurality of wells capturing a target substance, the well counting device comprising an image acquisition unit that acquires one or more images taken by the microscope, and a counting unit that counts the number of wells emitting fluorescence among the plurality of wells for each of the one or more images acquired by the image acquisition unit, wherein the counting unit counts the number of wells emitting fluorescence, excluding a well that also emits fluorescence in adjacent wells.

(9) Another embodiment is a program for causing a computer to function as an image acquisition unit that acquires one or more images of a plurality of wells capturing a target substance, and a counting unit that counts the number of wells emitting fluorescence among the plurality of wells for each of the one or more images acquired by the image acquisition unit, wherein the counting unit counts the number of wells emitting fluorescence, excluding a well that also emits fluorescence in adjacent wells.

In addition, a program that achieves the function of the well counting device 300 in Fig. 1 may be recorded on a computer-readable recording medium, so that a computer system can read and run the program recorded on the recording medium to thereby achieve the function of the well counting device 300. The "computer system" referred to herein includes an operating system (OS) and hardware such as peripheral devices.

The "computer system" includes an environment providing (or displaying) websites, if a WWW (World Wide Web) system is used.

The "computer-readable recording medium" refers to a storage device such as a portable medium, e.g., a flexible disk, a magneto-optical disk, a ROM, a CD-ROM, or the like, or a hard disk incorporated in the computer system. The "computer-readable recording medium" includes a medium that dynamically retains a program for a short period of time, such as a communication line that transmits a program through a network such as the internet or a telecommunication line such as a telephone line, or a medium that retains the program for a given period of time in that case, such as a volatile memory of a computer system that serves as a server or a client. The program may be designed to implement some of the functions described above. Furthermore, the program may be one that implements the above functions in combination with another program already recorded in the computer system.

The embodiment described above may be expressed as follows.

A computer-readable non-transitory storage medium storing a program that causes a computer:

to acquire one or more images of a plurality of wells capturing a target substance,

to count the number of wells emitting fluorescence among the plurality of wells for each of the one or more acquired images, and

to count the number of wells emitting fluorescence, excluding a well that also emits fluorescence in adjacent wells, among the plurality of wells.

The embodiments of the present invention have been described in detail above with reference to the drawings. However, the specific configurations should not be limited to these embodiments, but should include design changes within the scope not departing from the spirit of the present invention.

[Industrial Applicability]

According to the present invention, the well counting device, well counting method, digital measurement system, or program can eliminate disturbance factors.

[Reference Signs List]

10: Digital measurement system
100: Well array
200: Microscope
300: Well counting device
310: Image acquisition unit
320: Preprocessing unit
321: Luminance value correction unit
322: Well position identification unit
323: Overlap removal unit
324: Mixing removal unit
330: Counting unit

**Claims**

1. A well counting device, comprising:

an image acquisition unit that acquires one or more images of a plurality of wells capturing a target substance; and
a counting unit that counts the number of wells emitting fluorescence among the plurality of wells for each of the one or more images acquired by the image acquisition unit,
wherein the counting unit counts the number of wells emitting fluorescence, excluding a well that emits fluorescence in adjacent wells, among the plurality of wells.

2. The well counting device according to claim 1, wherein

each of the one or more images corresponds to a color of fluorescence emitted by each of the plurality of wells, and
the counting unit counts the number of wells emitting fluorescence, excluding, from wells emitting fluorescence in an image of fluorescence of a first color corresponding to a target image, wells emitting fluorescence in an image of fluorescence of a second color different from the first color, among the plurality of wells.

3. The well counting device according to claim 2, wherein a second threshold value that is used when determining that fluorescence is also emitted in an image of a color of fluorescence different from the color of fluorescence corresponding to the target image is different from a first threshold value that is used when counting the number of wells emitting fluorescence.

4. The well counting device according to any one of claims 1 to 3, wherein

each of the one or more images corresponds to a color of fluorescence emitted by each of the plurality of wells,
the well counting device comprises a mixing removal unit that adjusts the luminance of each pixel of the one or more images acquired by the image acquisition unit based on the luminance of a corresponding pixel in another image of the one or more images, and
when counting the number of wells emitting fluorescence among the plurality of wells, the counting unit uses an image whose luminance has been adjusted by the mixing removal unit.

5. The well counting device according to claim 4, wherein

the mixing removal unit comprises a filter that transmits the spectrum of fluorescence of a first color for a target image, and
when the transmission spectrum of the filter overlaps with the spectrum of fluorescence of a second color different from the first color, the counting unit uses an image obtained by removing a luminance component due to the fluorescence of the second color from an image taken using the filter.

6. The well counting device according to any one of claims 1 to 5, wherein one of the target substances is introduced into one of the plurality of wells.

7. A well counting method, comprising:

a first step of acquiring one or more images of a plurality of wells capturing a target substance; and
a second step of counting the number of wells emitting fluorescence among the plurality of wells for each of the one or more images acquired in the first step,
wherein in the second step, the number of wells emitting fluorescence is counted, excluding a well that also emits fluorescence in adjacent wells, among the plurality of wells.

8. A digital measurement system, comprising a microscope and a well counting device,

the microscope generating one or more images of a plurality of wells capturing a target substance,
the well counting device comprising:

an image acquisition unit that acquires one or more images taken by the microscope; and
a counting unit that counts the number of wells emitting fluorescence among the plurality of wells for each of the one or more images acquired by the image acquisition unit,
wherein the counting unit counts the number of wells emitting fluorescence, excluding a well that also emits fluorescence in adjacent wells.

9. A program for causing a computer to function as:

an image acquisition unit that acquires one or more images of a plurality of wells capturing a target substance; and
a counting unit that counts the number of wells emitting fluorescence among the plurality of wells for each of the one or more images acquired by the image acquisition unit,
wherein the counting unit counts the number of wells emitting fluorescence, excluding a well that also emits fluorescence in adjacent wells.

# FIG.1

EP 4 715 038 A1

# FIG.2

# FIG.3

300

320

EP 4 715 038 A1

**PREPROCESSING UNIT**

310 | 321 | 322 | 323 | 324 | 330

| IMAGE ACQUISITION UNIT | → | LUMINANCE VALUE CORRECTION UNIT | → | WELL POSITION IDENTIFICATION UNIT | → | OVERLAP REMOVAL UNIT | → | MIXING REMOVAL UNIT | → | COUNTING UNIT |

# FIG.4

F2  F1  F3

S2  S1  S3

WAVELENGTH

# FIG.5

LUMINANCE VALUE L₁ =  S1-1  −  S2-1  −  S3-1

FIG.6

# FIG.7

START

ACQUIRE IMAGES OF PLURALITY OF WELLS — Sa1

PREPROCESS IMAGE — Sa2

COUNT WELLS EMITTING FLUORESCENCE — Sa3

OUTPUT COUNTING RESULTS — Sa4

END

# FIG.8

```
        ┌─────────────┐
        │    START    │
        └──────┬──────┘
               │
               ▼
     ╱─────────────────────╲
    │   FOR EACH IMAGE      │────── Sb1
     ╲─────────────────────╱
               │
               ▼
     ╱─────────────────────╲
    │   FOR EACH WELL       │────── Sb2
     ╲─────────────────────╱
               │
               ▼          Sb3
           ◇────────────◇
          ╱     ARE      ╲         NO
        ◇ FLUORESCENCE    ◇──────────────┐
          ╲  CONDITIONS  ╱               │
           ◇ SATISFIED ?◇                │
               │                         │
              YES                        │
               ▼          Sb4            │
           ◇────────────◇                │
          ╱     DO       ╲    YES        │
        ◇ ADJACENT WELLS  ◇──────────────┤
          ╲    EMIT      ╱               │
           ◇FLUORESCENCE?◇               │
               │                         │
               NO                        │
               ▼          Sb5            │
           ◇────────────◇                │
          ╱     DO       ╲    YES        │
        ◇ OTHER IMAGES    ◇──────────────┤
          ╲  ALSO EMIT   ╱               │
           ◇FLUORESCENCE?◇               │
               │                         │
               NO                        │
               ▼                         │
     ┌─────────────────────┐             │
     │ COUNT NUMBER OF      │──── Sb6     │
     │ FLUORESCENT          │             │
     │ WELLS IN TARGET IMAGE│             │
     └──────────┬──────────┘             │
               │◄────────────────────────┘
               ▼
     ╱─────────────────────╲
    │                       │────── Sb7
     ╲─────────────────────╱
               │
               ▼
     ╱─────────────────────╲
    │                       │────── Sb8
     ╲─────────────────────╱
               │
               ▼
        ┌─────────────┐
        │     END     │
        └─────────────┘
```

# FIG.9

# FIG.10

# FIG.11

# FIG.12

## INTERNATIONAL SEARCH REPORT

| International application No. |
|---|
| **PCT/JP2024/017950** |

| A. | CLASSIFICATION OF SUBJECT MATTER |
|---|---|

*C12M 1/34*(2006.01)i; *C12Q 1/68*(2018.01)i; *G06M 11/00*(2006.01)i
FI:  C12M1/34 Z; C12Q1/68 100Z; G06M11/00 D

According to International Patent Classification (IPC) or to both national classification and IPC

| B. | FIELDS SEARCHED |
|---|---|

Minimum documentation searched (classification system followed by classification symbols)

C12M1/34; C12Q1/68; G06M11/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | WO 2021/199770 A1 (TOPPAN PRINTING CO., LTD.) 07 October 2021 (2021-10-07) claims, examples | 1-9 |
| A | WO 2019/131592 A1 (TOPPAN PRINTING CO., LTD.) 04 July 2019 (2019-07-04) claims, examples | 1-9 |
| A | JP 2020-150824 A (HITACHI, LTD.) 24 September 2020 (2020-09-24) claims, examples | 1-9 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 July 2024** | **16 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/017950**

| Patent document cited in search report | | | Publication date (day/month/year) | Patent family member(s) | | | Publication date (day/month/year) |
|---|---|---|---|---|---|---|---|
| WO | 2021/199770 | A1 | 07 October 2021 | US | 2023/0113730 | A1 | |
| | | | | EP | 4092122 | A1 | |
| WO | 2019/131592 | A1 | 04 July 2019 | (Family: none) | | | |
| JP | 2020-150824 | A | 24 September 2020 | US | 2022/0155227 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023082318 A
- JP 6800864 B